Europäisches Patentamt

European Patent Office

Office européen des brevets

(11) Veröffentlichungsnummer: **0 309 853**

**A1**

(12) **EUROPÄISCHE PATENTANMELDUNG**

(21) Anmeldenummer: **88115336.5**

(22) Anmeldetag: **19.09.88**

(51) Int. Cl.⁴: **G01D 5/26 , H02K 23/66**

(30) Priorität: **30.09.87 DE 3733105**

(43) Veröffentlichungstag der Anmeldung:
**05.04.89 Patentblatt 89/14**

(84) Benannte Vertragsstaaten:
**DE FR GB IT**

(71) Anmelder: **Siemens Aktiengesellschaft Berlin und München**
**Wittelsbacherplatz 2**
**D-8000 München 2(DE)**

(72) Erfinder: **Maxa, Vladimir, Dipl.-Ing.**
**Pariser-Strasse 10**
**D-8700 Würzburg(DE)**

(54) Optischer Impulsgeber für eine elektromotorische Antriebsanordnung.

(57) Es soll auf einfache Weise ein optischer Impuls-geber für eine elektromotorische Antriebsanordnung, insbesondere für einen Kraftfahrzeug-Fensterheber-antrieb mit einem Elektromotor und einem ange-flanschten Getriebe geschaffen werden, der die Be-triebssicherheit der Antriebsanordnung bei gleichzei-tiger Verringerung der Baugröße verbessert; dazu wird erfindungsgemäß vorgeschlagen, eine Spur-scheibe (1) innerhalb der elektromotorischen Antrieb-sanordnung auf der Rotorwelle (4) des Elektromotors bzw. auf einem Getriebe-Abtriebsrad (5) innerhalb des angeflanschten Getriebes anzuordnen, wobei eine schützende Abkapselung bei Anordnung der Spurscheibe (1) auf der Rotorwelle (4) durch ein sich auf der Spurscheibe (1) abstützendes Schutzgehäu-se (3) bzw. bei Anordnung auf dem Getriebe-Ab-triebsrad (5) durch ein aus einer Getriebegehäuse-wand (201), dem Getriebe-Abtriebsrad (5) selbst und zwischen beiden angeordnete Dichtungsringe (8) ge-bildetes Schutzgehäuse erfolgt.

FIG 2

FIG 3

EP 0 309 853 A1

## Optischer Impulsgeber für eine elektromotorische Antriebsanordnung

Die Erfindung bezieht sich auf einen optischen Impulsgeber gemäß Oberbegriff des Anspruchs 1 bzw. des Anspruchs 8; ein derartiger optischer Impulsgeber ist durch die EP-A1-0 066 636 bekannt.

Im bekannten Fall wird der optische Impulsgeber nach dem völligen Zusammenbau des Elektromotors an diesem außen befestigt. Dazu werden das Schutzgehäuse mit dem Statorgehäuse stirnseitig fest verbunden und die Spurscheibe auf ein aus dem Motor herausragendes Ende der Rotorwelle aufgesteckt. In jeder Hälfte des Schutzgehäuses sind axial durchgehende Öffnungen für den Lichtsender bzw. den Lichtempfänger vorgesehen.

Aufgabe der vorliegenden Erfindung ist es, auf fertigungs- und montagetechnisch einfache Weise einen optischen Impulsgeber der eingangs genannten Art zu schaffen, der die Betriebsicherheit der Antriebsanordnung bei gleichzeitiger Verringerung der Baugröße verbessert.

Die Lösung der Aufgabe ist bei einem optischen Impulsgeber der eingangs genannten Art erfindungsgemäß durch die Lehre des Anspruchs 1 bzw. des Anspruchs 8 möglich; vorteilhafte Ausgestaltungen der Erfindung sind jeweils Gegenstand der Unteransprüche.

Durch die erfindungsgemäße Anordnung des optischen Impulsgebers innerhalb des Statorgehäuses des Elektromotors bzw. innerhalb des Getriebegehäuses kann auf fertigungs- und montagetechnisch einfache Weise eine besonders kompakte elektromotorische Antriebsanordnung geschaffen werden, bei der aufgrund der Abstützung des Schutzgehäuses an der Spurscheibe die für eine sichere Drehzahlerkennung vorteilhafte unveränderte gegenseitige örtliche Zuordnung von Spurscheibe einerseits und Sende-bzw. Empfangsvorrichtung andererseits in sämtlichen Betriebszuständen, insbesondere bei Lageveränderungen der Spurscheibe aufgrund von Axial- und oder Zentrifugalbewegungen gewährleistet ist; gleichzeitig erhält man eine große Freizügigkeit bei der Anordnung des optischen Impulsgebers, da die Montage der Spurscheibe auch in größerem Abstand von den Wellenlagern erfolgen kann.

Zur vollständigen Abkapselung der Spurscheibe ist vorgesehen, daß ein Lichtsendergehäuse gehäusedicht in der einen Hälfte des Schutzgehäuses und ein Lichtempfänger gehäusedicht in der anderen Hälfte des Schutzgehäuses angeordnet sind, wobei zweckmäßigerweise der Blendenraster der Spurscheibe aus aufeinanderfolgenden Fenstern bzw. aus aufeinanderfolgenden Strickmarkierungen gebildet ist.

Die Abstützung des Schutzgehäuses und der Schutz der Spurscheibe vor Schmutz kann dadurch weiter verbessert werden, daß die Spurscheibe über eine axial angeformte vorstehende Nabe auf der Rotorwelle befestigt und das Schutzgehäuse an der Nabe abgestützt ist.

Bei der erfindungsgemäß vorgesehenen Anordnung der Spurscheibe auf bzw. an der Stirnseite des Getriebe-Abtriebsrades wird das Schutzgehäuse durch die Getriebegehäusewand, das Getriebe-Abtriebsrad und die zwischen beiden angeordneten Dichtungsringe gebildet. Es kann somit weitgehend auf gesonderte Bauteile zur Bildung eines abkapselnden Schutzgehäuses verzichtet werden.

Die Erfindung sowie weitere vorteilhafte Ausgestaltungen der Erfindung werden im folgenden anhand schematisch dargestellter Ausführungsbeispiele in der Zeichnung näher erläutert. Darin zeigen:

FIG 1 in einem axialen Längs-Teilschnittbild einen Kraftfahrzeug-Fensterheberantrieb mit einer innerhalb eines Statorgehäuses des Elektromotors angeordneten Spurscheibe,

FIG 2 in einer genaueren Detailvergrößerung der FIG 1 einen axialen Längsschnitt durch den optischen Impulsgeber,

FIG 3 einen Schnitt durch das Getriebegehäuse des in FIG 1 dargestellten Kraftfahrzeug-Fensterheberantriebes gemäß Schnittverlauf III-III, jedoch mit einer auf dem Getriebe-Abtriebsrad angeordneten Spurscheibe.

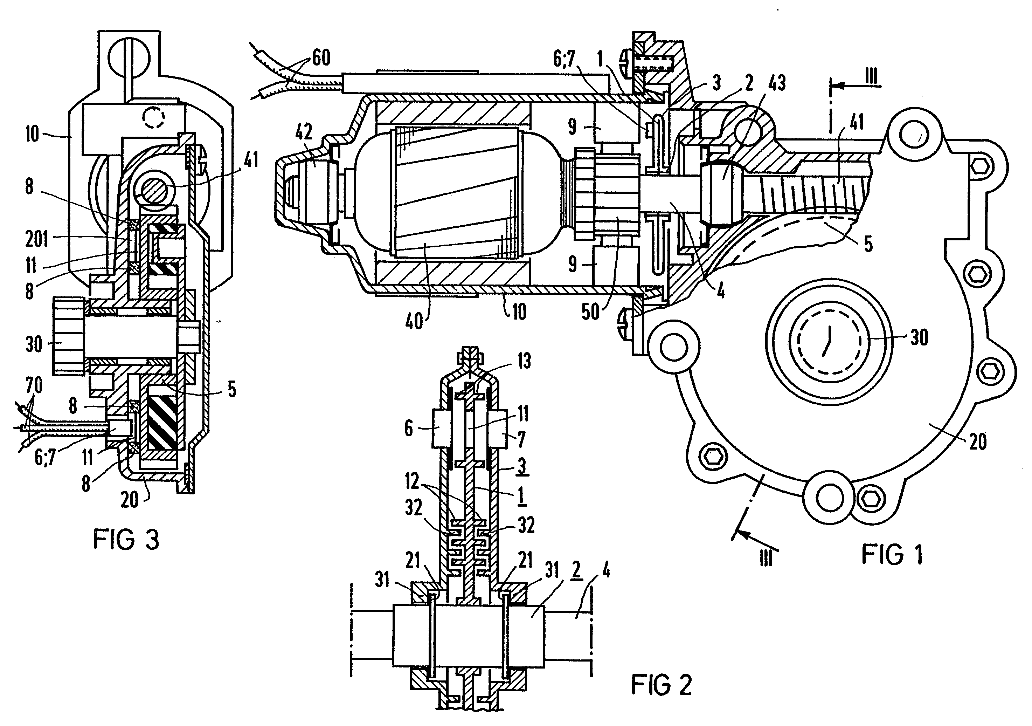

FIG 1 zeigt in einem axialen Längs-Teilschnittbild einen Kraftfahrzeug-Fensterheberantrieb, der im wesentlichen aus einem halbschalenförmigen Getriebegehäuse 20 und einem an dessen linker Seite angeflanschten Statorgehäuse 10 eines dauermagneterregten Kommutatormotors besteht. Die Rotorwelle 4 ist zwischen zwei Kalottenlagern 42,43 gelagert und trägt ein Rotorblechpaket 40 mit einer Rotorwicklung und einen von einem Bürstensystem 9 beschliffenen Kommutator 50. Die Rotorwelle 4 ist über das rechte Kalottenlager 43 hinaus als Schneckenantriebswelle 41 verlängert und treibt im Getriebegehäuse 20 ein auf einer Abtriebswelle 30 drehbar gelagertes Getriebe-Abtriebsrad 5 an.

Zwischen dem Kommutator 50 und dem rechten Kalottenlager 43 ist im Bereich des Bürstensystems 9 der erfindungsgemäße Impulsgeber angeordnet. Die Spurscheibe 1 ist über eine axial angeformte vorstehende Nabe 2 auf der Rotorwelle 4 befestigt und das Schutzgehäuse 3 an der Nabe 2 abgestützt ist. Der Lichtsender 6 und der Lichtempfänger 7 sind hierbei gemäß einer Ausgestaltung der Erfindung in ein und derselben Hälfte des

Schutzgehäuses 3 angeordnet. Die hier im Innern des Statorgehäuses nicht dargestellten Anschlußleitungen des Lichtsenders 6 und des Lichtempfängers 7 sind nach einer Ausgestaltung der Erfindung als Flachbandkabel ausgebildet und werden zusammen mit den Anschlußleitungen des Bürstensystems 9 aus dem Statorgehäuse 10 herausgeführt und gemäß FIG 1 zu einem Kabelbaum 60 zusammengefaßt. Es sind somit in vorteilhafter Weise keine zusätzlichen Bohrungen im Statorgehäuse 10 erforderlich.

Die Ausbildung der Anschlußleitungen des Lichtsenders 6 und des Lichtempfängers 7 als Flachbandkabel bietet den Vorteil, daß der optische Impulsgeber in axialer und radialer Richtung einerseits flexibel gehalten ist, so daß Axialspiel und Wellenschlag vom optischen Impulsgeber aufgefangen werden können und andererseits durch das relativ steife Flachbandkabel einem unerwünschten Mitdrehen des Schutzgehäuses 3 während der Drehbewegung der Rotorwelle 4 zusätzlich vorgebeugt werden kann.

Die Anordnung des optischen Impulsgebers ist nicht an die in der FIG 1 dargestellte Position gebunden. Der optische Impulsgeber kann, insbesondere bei anderen elektromotorischen Antriebsanordnungen auch auf dem anderen Rotorwellenende aufgesteckt sein.

FIG 2 zeigt in einer genaueren Detailvergrößerung der FIG 1 einen axialen Längsschnitt durch den optischen Impulsgeber, bei dem im Gegensatz zu dem in FIG 1 dargestellten Impulsgeber in der einen Hälfte des Schutzgehäuses 3 ein Lichtsender 6 und in der anderen Hälfte des Schutzgehäuses 3 ein Lichtempfänger 7 angeordnet ist.

Gemäß einer Ausgestaltung der Erfindung sind die Spurscheibe 1 über eine axial angeformte vorstehende Nabe 2 auf der Rotorwelle 4 befestigt und das Schutzgehäuse 3 an der Nabe 2 abgestützt, wobei die geführte Halterung der Nabe 2 durch in Umfangsrichtung verlaufenden Außenführungsringen 21 verbessert ist, die gegen korrespondierende umlaufende Führungsschultern 31 des Schutzgehäuses 3 anlaufen. Als hier nicht dargestellte Alternative ist es auch möglich, das Schutzgehäuse 3 mit in Umfangsrichtung verlaufenden Außenführungsringen zu versehen, die gegen korrespondierende umlaufende Führungsschultern der Nabe 2 anlaufen. Zusammen mit den auf beiden Stirnseiten der Spurscheibe 1 vorgesehenen Abstandsringen 13, die axial vorstehen und gegen die Innenseite des Schutzgehäuses 3 gerichtet sind, ergibt sich bei Axialbewegungen der Rotorwelle 4 ein konstanter axialer Abstand des Lichtsenders 6 und des Lichtempfängers 7 von dem Blendenraster 11, so daß eine sichere Drehzahlerkennung gewährleistet ist.

Der Schutz des Blendenrasters 11, des Lichtsenders 6 und des Lichtempfängers 7 vor Verschmutzung wird in vorteilhafter Weise dadurch verbessert, daß beide Stirnseiten der Spurscheibe 1 und beide Innenseiten des Schutzgehäuses 3 mit wechselseitig axial übergreifenden Ringen 12,32 versehen sind, die die Bahnen für evtl. eindringende Schmutzpartikel mäanderförmig verlängern.

Um die Reibung zwischen der rotierenden Spurscheibe 1 und dem an der Spurscheibe 1 abgestützten Schutzgehäuse 3 zu verringern, ist nach einer Ausgestaltung der Erfindung vorgesehen, daß die Spurscheibe 1 und/oder das Schutzgehäuse 3 aus einem flexiblen Material mit einem geringen Reibungskoeffizienten, insbesondere aus Kunststoff bestehen.

FIG 3 zeigt einen Schnitt durch das Getriebegehäuse 20 des in FIG 1 dargestellten Kraftfahrzeug-Fensterheberantriebes gemäß Schnittverlauf III-III. Innerhalb des Getriebegehäuses 20 ist das Getriebe-Abtriebsrad 5 auf einer Abtriebswelle 30 drehbar gelagert. Alternativ zu der in FIG 1,2 dargestellten Anordnung ist in FIG 3 die Spurscheibe 1 auf der Stirnseite 51 des Getriebe-Abtriebsrades 5 angeordnet.

Der Lichtsender 6 und der Lichtempfänger 7 sind gehäusedicht in der Getriebegehäusewand 201 befestigt und deren Anschlußleitungen 70 als Flachbandkabel direkt aus der Außenwand des Getriebegehäuses 20 herausgeführt. Der Bereich des Getriebe-Abtriebsrades 5, auf dem das Blendenraster 11 aufgetragen ist, wird durch Dichtungsringe 8 vor Verschmutzung geschützt. Die Dichtungsringe 8 können hierbei entweder mit ihrer einen Stirnseite an der Getriebegehäusewand 201 oder auf dem Getriebe-Abtriebsrad 5 befestigt sein; im ersten Fall sind die Dichtungsringe 8 feststehend, im zweiten Fall rotieren die Dichtungsringe 8 mit dem Getriebe-Abtriebsrad 5. Die durch die Dichtungsringe 8 erzeugten Reibungsverluste innerhalb der elektromotorischen Antriebsanordnung werden durch die von der Schneckenantriebswelle 41 bestimmten Übersetzung von 1:50 bis 1:70 entsprechend dem Übersetzungsverhältnis verringert.

Es dürfte ersichtlich sein, daß durch die erfindungsgemäße Anordnung des optischen Impulsgebers innerhalb der elektromotorischen Antriebsanordnung auf fertigungs- und montagetechnisch einfache und damit kostengünstige Weise die Betriebssicherheit der Antriebsanordnung bei gleichzeitiger Verringerung der Baugröße verbessert wird.

**Ansprüche**

1. Optischer Impulsgeber mit einer Spurscheibe (1), einem Lichtsender (6), einem Lichtempfänger (7) sowie einem zumindest zweiteiligen, die Spurscheibe (1), den Lichtsender (6) und den Lichtempfänger (7) abkapselnden Schutzgehäuse (3) für eine elektromotorische Antriebsanordnung, insbesondere einen Getriebemotor eines Kraftfahrzeug-Fensterheberantriebes,

**dadurch gekennzeichnet,**

daß die Spurscheibe (1) innerhalb des Statorgehäuses (10) des Elektromotors auf der Rotorwelle (4) angeordnet und das Schutzgehäuse (3) an der Spurscheibe (1) abgestützt ist.

2. Optischer Impulsgeber nach Anspruch 1,

**dadurch gekennzeichnet,**

daß ein Lichtsender (6) gehäusedicht in der einen Hälfte des Schutzgehäuses (3) und ein Lichtempfänger (7) gehäusedicht in der anderen Hälfte des Schutzgehäuses (3) angeordnet und ein Blendenraster (11) der Spurscheibe (1) aus aufeinanderfolgenden Fenstern gebildet ist.

3. Optischer Impulsgeber nach Anspruch 1 und/oder 2,

**dadurch gekennzeichnet,**

daß die Spurscheibe (1) über eine axial angeformte vorstehende Nabe (2) auf der Rotorwelle (4) befestigt und das Schutzgehäuse (3) an der Nabe (2) abgestützt ist.

4. Optischer Impulsgeber nach der Anspruch 3,

**dadurch gekennzeichnet,**

daß die Nabe (2) mit in Umfangsrichtung verlaufenden Außenführungsringen (21) versehen ist, die gegen korrespondierende, umlaufende Führungsschultern (31) des Schutzgehäuses (3) anlaufen.

5. Optischer Impulsgeber nach Anspruch 3,

**dadurch gekennzeichnet,**

daß das Schutzgehäuse (3) mit in Umfangsrichtung verlaufenden Außenführungsringen versehen ist, die gegen korrespondierende, umlaufende Führungsschultern der nabe (2) anlaufen.

6. Optischer Impulsgeber nach einem der Ansprüche 1 bis 5,

**dadurch gekennzeichnet,**

daß beide Stirnseiten der Spurscheibe (1) und beide Innenseiten des Schutzgehäuses (3) mit wechselseitig axial übergreifenden Ringen (12.32) versehen sind.

7. Optischer Impulsgeber nach einem der Ansprüche 1 bis 6,

**dadurch gekennzeichnet,**

daß beide Stirnseiten der Spurscheibe (1) mit axial vorstehenden, gegen die Innenseite des Schutzgehäuses (3) gerichteten Abstandsringen (13) versehen sind.

8. Optischer Impulsgeber mit einer Spurscheibe (1), einem Lichtsender (6), einem Lichtempfänger (7) sowie zumindest zweiteiligen, die Spurscheibe (1), den Lichtsender (6) und den Lichtempfänger (7) abkapselnden Schutzgehäuse für eine elektromotorische Antriebsanordnung, insbesondere einen Getriebemotor eines Kraftfahrzeug-Fensterheberantriebes mit einem Getriebegehäuse (20) und einem Getriebe-Abtriebsrad (5) mit einer im konstanten Abstand zur Getriebegehäusewand (201) verlaufenden Stirnseite (51),

**dadurch gekennzeichnet,**

daß die Spurscheibe (1) auf bzw. an der Stirnseite (51) des Getriebe-Abtriebsrades (5) angeordnet und zwischen der Getriebegehäusewand (201) und der Spurscheibe (1) Dichtungsringe (8) außerhalb des Blendenrasters (11) angeordnet sind.

9. Optischer Impulsgeber nach Anspruch 8,

**dadurch gekennzeichnet,**

daß das Abtriebsrad (5) selbst als Spurscheibe ausgebildet ist.

10. Optischer Impulsgeber nach Anspruch 8 und/oder 9,

**dadurch gekennzeichnet, daß** die Dichtungsringe (8) mit ihrer einen Stirnseite an der Getriebegehäusewand (201) befestigt sind, und mit ihrer anderen Stirnseite auf der Spurscheibe (1) gleiten.

11. Optischer Impulsgeber nach Anspruch 8 und/oder 9,

**dadurch gekennzeichnet,**

daß die Dichtungsringe (8) mit ihrer einen Stirnseite auf dem Abtriebsrad (5) befestigt sind und mit ihrer anderen Stirnseite auf der Getriebegehäusewand (201) gleiten.

12. Optischer Impulsgeber nach einem der Ansprüche 1 bis 11,

**dadurch gekennzeichnet,**

daß sowohl Lichtsender (6) als auch Lichtempfänger (7) in einer Hälfte des Schutzgehäuses (3) bzw. in der Getriebegehäusewand (201) angeordnet und das Blendenraster (11) der Spurscheibe aus aufeinanderfolgenden Strichmarkierungen gebildet ist.

13. Optischer Impulsgeber nach einem der Ansprüche 1 bis 12,

**dadurch gekennzeichnet,**

daß die Spurscheibe (1) und/oder die Abkapselung aus einem flexiblen Material mit einem geringen Reibungskoeffizienten, insbesondere aus Kunststoff bestehen.

14. Optischer Impulsgeber nach einem der Ansprüche 1 bis 13,

**dadurch gekennzeichnet,**

daß die Anschlußleitungen des Lichtsenders (6) und des Lichtempfängers (7) als Flachbandkabel ausgebildet sind.

FIG 3

FIG 2

FIG 1

EP 0 309 853 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | IBM TECHNICAL DISCLOSURE BULLETIN, Band 22, Nr. 8A; Januar 1980, Seiten 3091-3092, New York, US; D.J. JUSTUS: "Prevention of contamination in an optical tachometer" * Insgesamt * --- | 1,2,8,9 ,11 | G 01 D 5/26 H 02 K 23/66 |
| P,A | EP-A-0 066 636 (SIEMENS) * Insgesamt * --- | 1 | |
| A | PATENT ABSTRACTS OF JAPAN, Band 10, Nr. 16 (E-375)[2073], 22. Januar 1986, Seite 31 E 375; & JP-A-60 176 439 (MATSUSHITA DENKI SANGYO K.K.) 10-09-1985 * Zusammenfassung * --- | 1 | |
| A | PATENT ABSTRACTS OF JAPAN, Band 11, Nr. 77 (E-487)[2524], 7. März 1987, Seite 52 E 487; & JP-A-61 231 851 (MITSUBISHI ELECTRIC CORP.) 16-10-1986 * Zusammenfassung * ----- | 1 | |

DOMAINES TECHNIQUES RECHERCHES (Int. Cl.4)

G 01 D
G 01 P
E 05 F
H 02 K

Le présent rapport a été établi pour toutes les revendications

| Lieu de la recherche | Date d'achèvement de la recherche | Examinateur |
|---|---|---|
| LA HAYE | 05-01-1989 | RAMBOER P. |